# EUROPEAN PATENT APPLICATION

(11) **EP 4 769 095 A1**
(43) Date of publication of application: **01.07.2026**
(21) Application number: 24935373.1
(22) Date of filing: 16.04.2024
(51) Int. Cl.: G06F 3/04817, G06F 9/451

(54) **INTERFACE SWITCHING METHOD AND ELECTRONIC DEVICE**

(71) Applicant: Honor Device Co., Ltd., Shenzhen, Guangdong 518040 (CN)
(72) Inventor: NIU, Guofu, Shenzhen, Guangdong 518040 (CN)
(74) Representative: MERH-IP Matias Erny Reichl Hoffmann Patentanwälte PartG mbB
(86) International application number: PCT/CN2024/088132
(87) International publication number: WO 2025/217820

(57) **Abstract**

Embodiments of this application disclose an interface switching method and an electronic device. The method includes: The electronic device displays a first interface, where the first interface is an interface of a home screen application; displays a second interface of a first application in response to a first operation performed on an icon of the first application in the first interface, where after the second interface is displayed, a layer of the first interface is not destroyed; starts, in response to a second operation of returning to the first interface and before a notification of drawing completion is obtained, to display a first animation of returning to the first interface; displays the second interface of the first application in response to a third operation performed on the icon of the first application in the first interface, where the layer of the first interface is not destroyed, and a display configuration of the home screen application is changed after the second interface is displayed; and thereafter starts, in response to a fourth operation of returning to the first interface and after the notification of drawing completion is obtained, to display a second animation of returning to the first interface. In the embodiments of this application, a waiting time for drawing a home screen layer can be reduced, and responsiveness can be improved.

## Description

### TECHNICAL FIELD

This application relates to the field of terminal technologies, and in particular, to an interface switching method and an electronic device.

### BACKGROUND

When an electronic device opens a home screen, a layer of a home screen application needs to be drawn for display. After a user enters another application from the home screen, a layer of another application needs to be drawn for subsequent display. When the user operates the electronic device to re-switch from the another application to the home screen application, in response to an operation of returning to the home screen by the user, the electronic device needs to wait for drawing of the layer of the home screen application, and a home screen interface can be displayed only after the drawing is completed. In the foregoing process, a drawing process of the home screen layer takes a long time, and a required time between a user operation and display of the home screen interface is long. As a result, a response speed of an operation of returning to the home screen by the user is low.

### SUMMARY

Embodiments of this application provide an interface switching method and an electronic device. In this method, a response to an operation of returning to a home screen by a user is accelerated, and a responsiveness speed of a user operation is increased, thereby improving user experience.

According to a first aspect, an embodiment of this application provides an interface switching method and an electronic device. The method is applied to the electronic device, and includes: The electronic device displays a first interface, where the first interface is an interface of a home screen application, and the first interface includes an icon of a first application; displays a second interface of the first application in response to a first operation performed on the icon of the first application in the first interface, where after the second interface is displayed, a layer of the first interface is not destroyed; displays, in response to a second operation of returning to the first interface, a first animation of returning to the first interface, where before a notification of drawing completion is obtained, the first animation starts to be displayed; displays the second interface of the first application in response to a third operation performed on the icon of the first application in the first interface, where the layer of the first interface is not destroyed after the second interface is displayed, and a display configuration of the home screen application is changed after the second interface is displayed; and after the display configuration of the home screen application is changed, displays, in response to a fourth operation of returning to the first interface, a second animation of returning to the first interface, where after the notification of drawing completion is obtained, the second animation starts to be displayed.

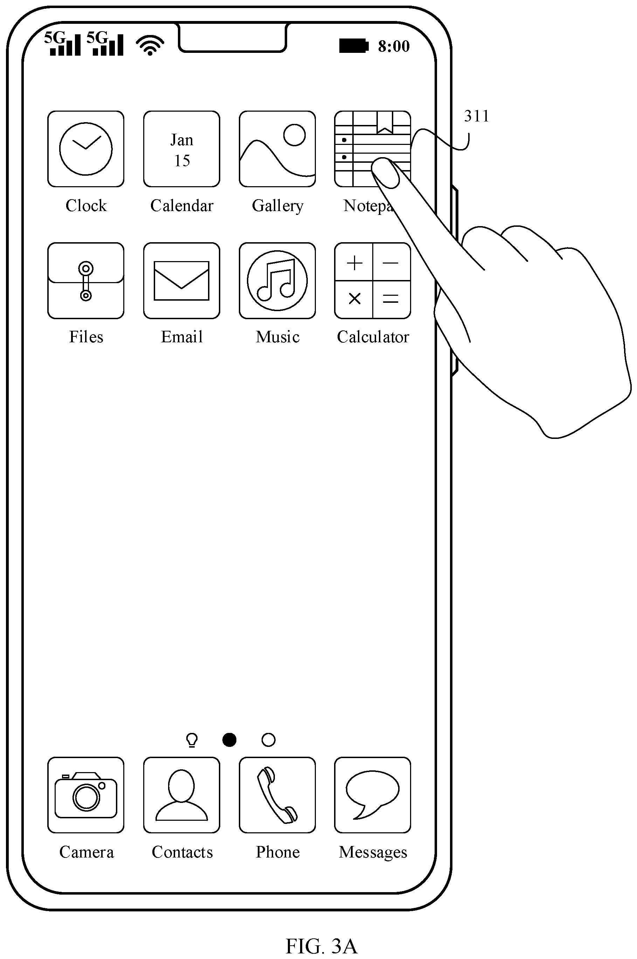

The second operation and the fourth operation are operations of returning to the home screen in this application, for example, three cases in FIG. 3A~FIG. 3C (the first operation). This is not limited in this application. The notification of drawing completion is a FinishDraw notification. The foregoing execution process may be understood as that no FinishDraw notification is obtained between a response to the second operation and display of the first animation. The FinishDraw notification is obtained between a response to the fourth operation and display of the second animation.

Optionally, the display configuration of the home screen application may include a display mode, a home screen layout, a home screen wallpaper, and the like. The display mode of the home screen application may be a display mode of the electronic device. The display mode may include a dark mode and a light mode. The third operation may be an operation of pulling down a notification bar to start the first application, or may be an operation of tapping the icon of the first application. The first application has a function of adjusting the display mode of the home screen. For example, the first application is a settings application, and the settings application includes different setting functions for the home screen. Certainly, the foregoing is an operation of the display configuration, and may alternatively be a different operation of adjusting the home screen layout, the home screen wallpaper, or the like.

In a possible implementation, after the second interface is displayed, the method further includes: in response to a user operation of setting the display mode, setting the display mode of the electronic device to a dark mode. Before the user operation of setting the display mode, the display mode of the electronic device is the light mode. The home screen displayed after the second animation ends is in a dark mode. Before a response to the third operation performed on the icon of the first application in the first interface, the home screen of the first interface is in a light mode.

In this embodiment of this application, when the home screen layer is not destroyed, the electronic device may directly display, in response to an operation of returning to the home screen, a returning motion effect without a need to wait for the notification of drawing completion. In this way, a waiting time is reduced, and operation responsiveness is improved. When a home screen window needs to be adjusted during the operation of setting the display mode, even if the home screen layer is not destroyed, it is also necessary to wait for the notification of drawing completion. Display can be performed only when drawing of the home screen window that needs to be adjusted is completed, which avoids screen flickering caused when the home screen layer is displayed in a light mode, thereby improving stability and timeliness of display.

In a possible implementation, the method further includes: displaying the second interface of the first application in response to a fifth operation performed on the icon of the first application in the first interface, where the layer of the first interface is not destroyed after the second interface is displayed; displaying a third interface in response to an operation of rotating a screen, where the third interface is a landscape interface of the second interface; and in response to a sixth operation of returning to the first interface, displaying a third animation of returning to the first interface, where after the notification of drawing completion is obtained, the second animation starts to be displayed. In this way, during a rotation operation, when the home screen window needs to be adjusted, even if the home screen layer is not destroyed, it is also necessary to wait for the notification of drawing completion. Display can be performed only when drawing of the home screen window that needs to be adjusted is completed, which avoids screen flickering caused when a longitudinal home screen layer of the home screen layer is displayed in the landscape interface, thereby improving stability and timeliness of display.

After display of the third animation ends, a displayed home screen interface is a landscape interface, and an undestroyed layer of the first interface is a portrait interface.

In a possible implementation, the displaying, in response to a second operation of returning to the first interface, a first animation of returning to the first interface includes: The electronic device displays, in response to the second operation of returning to the first interface, before the notification of drawing completion is obtained, and based on a fact that a condition that the layer of the first interface is not destroyed and a window state of the home screen application is unchanged is met, the first animation of returning to the first interface. In this way, that the window state of the home screen application is unchanged indicates that there is no need to adjust a current home screen window. The undestroyed layer of the first interface is a latest home screen layer that needs to be displayed. Under the condition that the layer of the first interface is not destroyed and the window state of the home screen application is unchanged, the electronic device may directly display a motion effect of returning to the home screen, thereby reducing a waiting time for drawing, improving responsiveness, and improving user experience.

In a possible implementation, the displaying, in response to a fourth operation of returning to the first interface, a second animation of returning to the first interface includes: The electronic device displays, in response to the fourth operation of returning to the first interface, after the notification of drawing completion is obtained, and based on a fact that the condition that the layer of the first interface is not destroyed and the window state of the home screen application is unchanged is not met, the second animation of returning to the first interface. In this way, in a process in which the electronic device displays the third interface in response to the operation of rotating the screen by the user, the electronic device determines that the window state of the home screen application changes, and the electronic device determines that the condition that the layer of the first interface is not destroyed and the window state of the home screen application is unchanged is not met. In this case, before the motion effect can be displayed, it is necessary to wait for completion of drawing the home screen window whose window state is changed and that needs to be adjusted, that is, wait for the FinishDraw notification. This can avoid screen flickering caused when the longitudinal home screen layer of the home screen layer is displayed in the landscape interface, thereby improving stability and timeliness of display.

In a possible implementation, that the electronic device displays, in response to the second operation of returning to the first interface, before the notification of drawing completion is obtained, and based on a fact that a condition that the layer of the first interface is not destroyed and a window state of the home screen application is unchanged is met, the first animation of returning to the first interface includes: The electronic device starts, in response to the second operation of returning to the first interface, to execute returning to the home screen; the electronic device determines whether the layer of the first interface is not destroyed, and whether the window state of the home screen application is unchanged; and when the condition that the layer of the first interface is not destroyed and the window state of the home screen application is unchanged is met, the electronic device performs motion effect readiness processing, and thereafter displays the second animation of returning to the first interface.

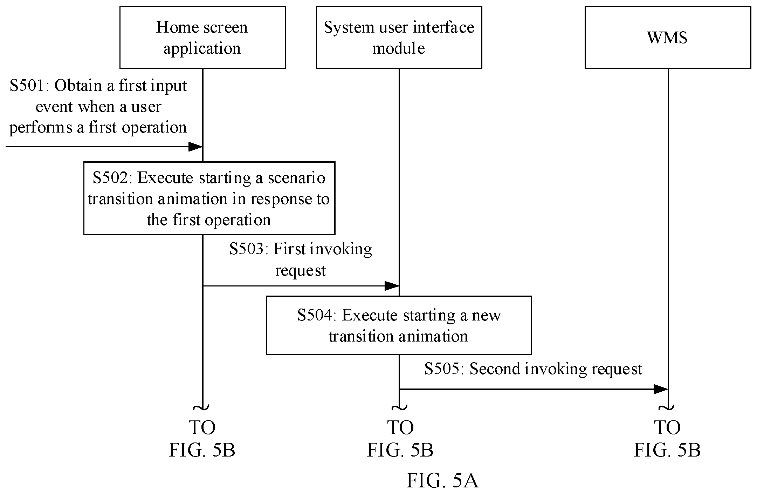

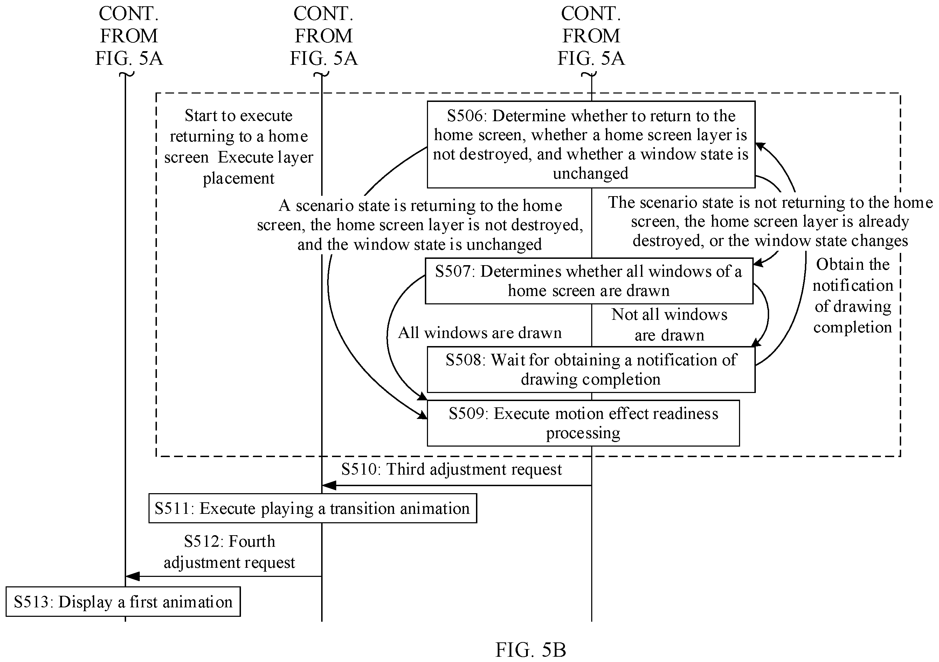

The starting to execute returning to the home screen is a process of executing startExitingRecents in FIG. 5A and FIG. 5B, and the motion effect readiness processing is a process of onTransactionReady in FIG. 5A and FIG. 5B.

In this embodiment of this application, in a process of executing a startExitingRecents function, the electronic device may determine the condition that the layer of the first interface is not destroyed and the window state of the home screen application is unchanged. When the condition is met, onTransactionReady may be executed to directly display the motion effect of returning to the home screen, thereby reducing the waiting time for drawing, improving the responsiveness, and improving user experience.

In a possible implementation, that the electronic device displays, in response to the fourth operation of returning to the first interface, after the notification of drawing completion is obtained, and based on a fact that the condition that the layer of the first interface is not destroyed and the window state of the home screen application is unchanged is not met, the second animation of returning to the first interface includes: The electronic device starts, in response to the fourth operation of returning to the first interface, to execute returning to the home screen; the electronic device determines whether the layer of the first interface is not destroyed, and whether the window state of the home screen application is unchanged; and when the condition that the layer of the first interface is not destroyed and the window state of the home screen application is unchanged is not met, after the electronic device obtains the notification of drawing completion, the electronic device performs layer placement; and when all window pictures are drawn, the electronic device performs motion effect readiness processing by using a motion effect processing thread, and thereafter displays the second animation of returning to the first interface.

The executing layer placement is a process of executing performSurfacePlacement in FIG. 5A and FIG. 5B. The starting to execute returning to the home screen is the process of executing startExitingRecents in FIG. 5A and FIG. 5B, and the motion effect readiness processing is the process of onTransactionReady in FIG. 5A and FIG. 5B.

In this embodiment of this application, in a process in which the electronic device displays the third interface in response to the operation of rotating the screen by the user, the electronic device determines that the window state of the home screen application changes, and the electronic device determines that the condition that the layer of the first interface is not destroyed and the window state of the home screen application is unchanged is not met. In this case, before the motion effect can be displayed, it is necessary to wait for completion of drawing the home screen window whose window state changes and that needs to be adjusted, that is, wait for the FinishDraw notification. This can avoid screen flickering caused when the longitudinal home screen layer of the home screen layer is displayed in the landscape interface, thereby improving stability and timeliness of display.

In a possible implementation, the method further includes: When the condition that the layer of the first interface is not destroyed and the window state of the home screen application is unchanged is not met, the electronic device determines whether all window pictures of the home screen application are drawn; and if all window pictures are drawn, the electronic device returns an animation of the first interface by using the layer of the first interface; or if not all window pictures are drawn, the electronic device re-obtains the notification of drawing completion, and redetermines whether all window pictures are drawn until it is determined that all window pictures are drawn and the animation of returning to the first interface is displayed by using the layer of the first interface. This can avoid screen flickering caused when the longitudinal home screen layer of the home screen layer is displayed in the landscape interface, thereby improving stability and timeliness of display.

In a possible implementation, the method further includes: The electronic device sets, in response to the fourth operation of returning to the first interface, a scenario state to a scenario of returning to the home screen; the electronic device determines whether the scenario state is the scenario of returning to the home screen; when the scenario state is the scenario of returning to the home screen, the electronic device determines that the condition that the layer of the first interface is not destroyed and the window state of the home screen application is unchanged is met; and after it is determined whether the condition that the layer of the first interface is not destroyed and the window state of the home screen application is unchanged is met, the electronic device sets the scenario state to a scenario of not returning to the home screen; and that the electronic device redetermines whether all window pictures are drawn includes: The electronic device redetermines whether the scenario state is the scenario of returning to the home screen; and when the scenario state is not the scenario of returning to the home screen, the electronic device redetermines whether all window pictures are drawn. In this way, based on the foregoing sequence of first determining whether the scenario state is the scenario of returning to the home screen, and then determining whether the layer of the first interface is not destroyed and whether the window state of the home screen application is unchanged, if the user performs a rotation operation, after waiting for the FinishDraw notification, it is redetermined whether the scenario state is the scenario of returning to the home screen, and then it is redetermined whether the layer of the first interface is not destroyed and whether the window state of the home screen application is unchanged. In this case, when it is determined that the scenario state is not the scenario of returning to the home screen, whether all window pictures are drawn may be determined directly, and it is necessary to perform a process of determining whether the layer of the first interface is not destroyed, and whether the window state of the home screen application is unchanged. In this way, the operation can be simplified and processing efficiency can be improved.

In a possible implementation, both the second operation and the fourth operation are operations of swiping up to return to the interface of the home screen application, and both the first animation and the second animation are animations from displaying a user interface of the first application to displaying the interface of the home screen application. In this way, when the user swipes up to return to the home screen, the electronic device responds in advance based on the undestroyed home screen layer, which improves the operation responsiveness.

For the second operation and the fourth operation, refer to a description of the case 1 in FIG. 3A~FIG. 3C. Details are not described again.

In a possible implementation, when a waiting change flag bit is a first mark, the window state of the home screen application is unchanged; and when the waiting change flag bit is a second mark, the window state of the home screen application changes. In this way, the electronic device can determine, by using a flag bit, whether the window state of the home screen application is unchanged, thereby ensuring accuracy and simplicity of determining.

In a possible implementation, when a scenario state flag bit is a first mark, the scenario state is returning to the home screen; and when the scenario state flag bit is a second mark, the scenario state is not returning to the home screen. In this way, the electronic device can determine, by using the flag bit, whether the scenario state is returning to the home screen, thereby ensuring accuracy of triggering a motion effect scenario in advance.

In a possible implementation, when target information is preset information, the home screen layer is not destroyed; and when the target information is not the preset information, the home screen layer is already destroyed.

The target information may be a package name of the home screen that needs to be displayed, a window name of a home screen window that needs to be displayed, or a destruction flag bit of the home screen layer. The preset information may be a package name of the undestroyed home screen, a window name of an undestroyed home screen window, or an undestroyed mark. Reference may be made to related content in S506, and details are not described again.

According to a second aspect, an embodiment of this application provides an electronic device. The electronic device includes one or more processors, a display screen, and a memory. The memory is coupled to the one or more processors. The memory is configured to store computer program code. The computer program code includes computer instructions. The one or more processors invoke the computer instructions to enable the electronic device to perform the interface switching method according to any one of the first aspect or the possible implementations of the second aspect.

According to a third aspect, an embodiment of this application provides a chip system. The chip system is applied to an electronic device. The chip system includes one or more processors, and the processors are configured to invoke computer instructions, to enable the electronic device to perform the interface switching method according to any one of the first aspect or the possible implementations of the second aspect.

According to a fourth aspect, an embodiment of this application provides a computer program product including instructions. When the computer program product runs on an electronic device, the electronic device is enabled to perform the interface switching method according to any one of the first aspect or the possible implementations of the second aspect.

According to a fifth aspect, an embodiment of this application provides a computer-readable storage medium, including instructions. When the instructions are run on an electronic device, the electronic device is enabled to perform the interface switching method according to any one of the first aspect or the possible implementations of the second aspect.

### BRIEF DESCRIPTION OF DRAWINGS

FIG. 1 is a schematic diagram of a hardware structure of an electronic device according to an embodiment of this application;
FIG. 2 is a schematic diagram of a software structure of an electronic device according to an embodiment of this application;
FIG. 3A~FIG. 3C are schematic diagrams of a group of user interfaces according to an embodiment of this application;
FIG. 4 is a schematic flowchart of an interface switching method according to an embodiment of this application;
FIG. 5A and FIG. 5B are other schematic flowcharts of an interface switching method according to an embodiment of this application;
FIG. 6 is still another schematic flowchart of an interface switching method according to an embodiment of this application; and
FIG. 7A and FIG. 7B are a group of schematic diagrams of a display procedure for switching an interface according to an embodiment of this application.

### DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application. Mentioning an "embodiment" in this specification means that a specific feature, structure, or characteristic described with reference to this embodiment may be included in at least one embodiment of this application. The term appearing at various locations in this specification does not necessarily refer to a same embodiment, or an independent or alternative embodiment mutually exclusive with another embodiment. A person skilled in the art may explicitly and implicitly understand that the embodiments described in this specification may be combined with another embodiment. Based on the embodiments of this application, all other embodiments obtained by a person of ordinary skill in the art without creative efforts fall within the protection scope of this application.

In the specification, claims, and accompanying drawings of this application, the terms "first", "second", "third", and the like are intended to distinguish between different objects, but are not intended to describe a particular order. In addition, the terms "include" and "have" and any variations thereof are intended to cover non-exclusive inclusion. For example, a series of steps or units are included, or optionally, steps or units not listed are further included, or optionally other steps or units inherent to these processes, methods, products, or devices are further included.

The accompanying drawings show only some content related to this application but not all content. Before example embodiments are further described in detail, it should be mentioned that some example embodiments are described as processing or methods depicted as flowcharts. Although the flowcharts describe operations (or steps) as sequential processing, many of these operations may be implemented in parallel, concurrently, or simultaneously. In addition, a sequence of the operations may be rescheduled. The processing may be terminated when operations of the processing are completed, but there may be additional steps not included in the accompanying drawings.

The embodiments of this application disclose an interface switching method. When being re-switched back from another application interface to a home screen, an electronic device may determine, based on a fact that a home screen layer is not destroyed when a home screen application switches from a foreground to a background, whether an undestroyed home screen layer can be directly displayed. When the undestroyed home screen layer can be directly displayed, the electronic device directly displays the undestroyed home screen layer without a need to wait for completion of drawing of the home screen layer. In this way, a response to an operation of returning to the home screen by a user can be accelerated, and responsiveness to a user operation can be improved, thereby improving user experience.

Therefore, a premise for implementing this application is that the home screen layer is not destroyed when the home screen application switches from the foreground to the background. The following describes related technologies for which the home screen layer is not destroyed.

When the home screen application switches from running in the foreground to running in the background, a visible state of a root layout of the home screen application can be kept visible, and a process of destroying the home screen layer is intercepted, so that when the home screen switches to the background, the home screen layer is retained, that is, the home screen layer is not destroyed. When the home screen application switches back from the background to the foreground, because the visible state of the root layout of the home screen application is visible, the home screen application may directly perform display based on the undestroyed home screen layer.

The electronic device in the embodiments of this application may be a device with a touchscreen, such as a notebook computer, a desktop computer, a mobile phone, a tablet computer, a desktop computer, a handheld computer, a smart band, an ultra-mobile personal computer, a netbook, a personal phone, a personal data assistant, or an augmented reality (AR)/virtual reality (VR). A specific form of the electronic device is not limited in this application.

The following describes an apparatus in the embodiments of this application.

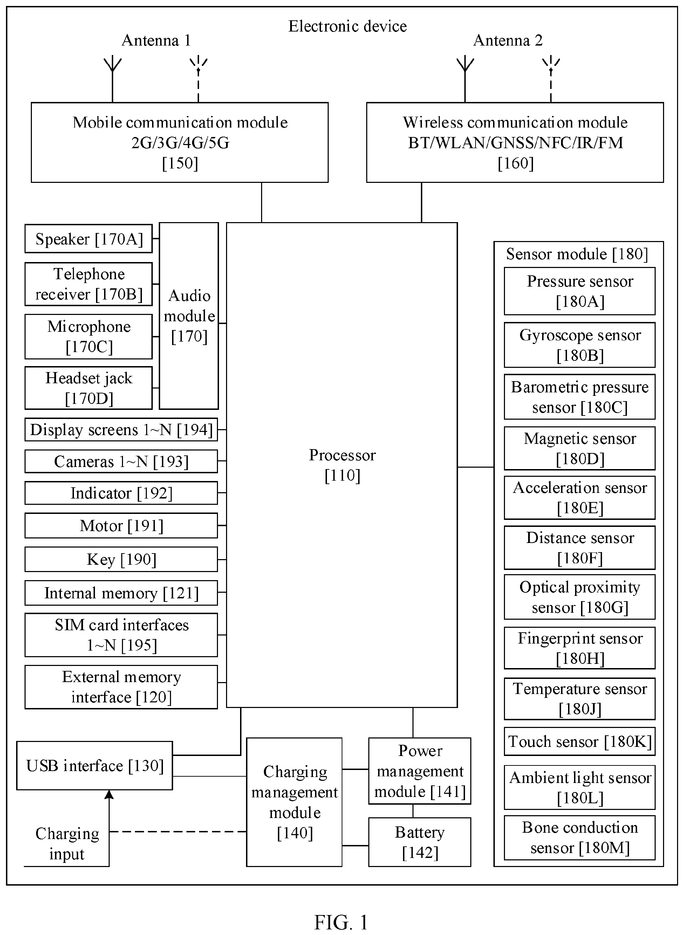

FIG. 1 is a schematic diagram of a hardware structure of an electronic device according to an embodiment of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

The external memory interface 120 may be configured to connect to an external memory card, for example, a Micro SD card, to expand a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121, to perform various function applications and data processing of the electronic device. The internal memory 121 may include a program storage area and a data storage area.

It may be understood that, an interface connection relationship between the modules shown in this embodiment of this application is merely an example for description, and constitutes no limitation on the structure of the electronic device. In some other embodiments of this application, the electronic device may alternatively use an interface connection manner different from that in the foregoing embodiment, or use a combination of a plurality of interface connection manners.

The electronic device implements a display function by using the GPU, the display screen 194, the application processor, and the like. The GPU is a microprocessor for image processing, and is connected to the display screen 194 and the application processor. The GPU is configured to perform mathematical and geometric computation, for image rendering. The processor 110 may include one or more GPUs that execute program instructions to generate or change displayed information.

The display screen 194 is configured to display an image, a video, and the like. The display screen 194 may include a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N display screens 194, where N is a positive integer greater than 1.

The touch sensor 180K is also referred to as a "touch panel". The touch sensor 180K may be disposed on the display screen 194. The touch sensor 180K and the display screen 194 form a touchscreen, which is also referred to as a "touch control screen". The touch sensor 180K is configured to detect a touch operation performed on or near the touch sensor.

In this embodiment of this application, the electronic device 100 may detect a user operation by using the touch sensor 180K. The user operation may include a touch event generated when the user touches the display screen 194. For example, the user performs a swipe-up operation on an interface of a specific application (not a home screen). In response to a touch event of the swipe-up operation, the electronic device displays a home screen interface. For a touch operation corresponding to a touch event in this application, refer to related content in FIG. 3A~FIG. 3C. Details are not described again.

Optionally, in the foregoing operation manner, only a touch operation is used as an example. An operation in this application may be a mid-air gesture operation, voice control, or the like. This is not limited.

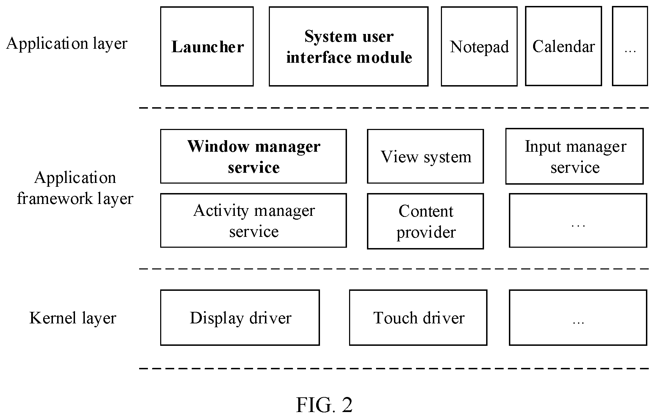

FIG. 2 is a schematic diagram of a software structure of an electronic device according to an embodiment of this application.

As shown in FIG. 2, a software framework of the electronic device in this application may include an application (Application) layer, an application framework (framework, FWK) layer, and a kernel (kernel) layer.

The application layer may include a series of application packages, for example, application programs (which may also be referred to as applications, and some of the foregoing applications are not shown) such as Launcher (Launcher), system user interface module (System UI), Notepad, and Calendar. In this embodiment of this application, a first application may be any application at the application layer. A user may open or exit the first application (the first application is a non-home screen application). Alternatively, when the first application is displayed, a swipe-up operation of the user may enable exiting of the first application for display of the home screen (with reference to a related description in FIG. 3A~FIG. 3C).

The Launcher (Launcher) is one of main program components in an Android (Android) system. The electronic device uses the Launcher to start an application on an Android home screen, or exit the application to display the home screen.

The system user interface module (System UI) is a system interface of the Android system. The system user interface module may include a status bar (Status bar) in an upper part of a user interface of the electronic device, a navigation bar (Navigation Bar) in a lower part of the user interface of the electronic device, a lock screen interface (Keyguard), a power interface (Power UI), and the like.

The application framework layer provides an application programming interface (application programming interface, API) and a programming framework for applications at the application layer. The application framework layer includes some predefined functions.

As shown in FIG. 2, the application framework layer may include a window manager service (window manager service, WMS), an activity manager service (activity manager service, AMS), a view system (view), a content provider, an input manager service, and the like.

The window manager service is used to manage a window program. A window manager may obtain a size of a display screen, determine whether a status bar exists, lock a screen, capture a screenshot, and the like.

A window may be understood as a region on the screen, and a user interface (userinterface, UI) is displayed in the window to perform interaction with the user. From a perspective of a system, the window is a surface (surface). One screen may have a plurality of windows, and a layout and a sequence of the plurality of windows and a window animation are managed by the window manager service WMS. For example, a home screen application in FIG. 3A may include windows such as a leftmost home screen, an icon, a wallpaper, and a status bar.

The activity manager service is used to manage a lifecycle of an application, start or kill a process of an application, schedule a task, and the like.

The view system includes visual controls, for example, a control for displaying a text and a control for displaying a picture. The view system may be configured to build an application. A display interface may include one or more views. For example, a display interface including an SMS message notification icon may include a view for displaying a text and a view for displaying a picture.

The content provider is configured to store and obtain data, and enable the data to be accessible to an application. The data may include a video, an image, audio, calls that are made and answered, a browsing history and a bookmark, a phone book, and the like.

The input manager service may receive operation event information from a touch driver. The input manager service may obtain a description parameter of an operation event. After receiving the operation event information, the input manager service may report information about the operation event to an application corresponding to the application layer. For example, with reference to a first operation shown in FIG. 3A~FIG. 3C, the input manager service may obtain the first operation, and report event information of the first operation to the home screen.

The kernel layer is a foundation of an Android operating system, and final functions of the Android operating system are implemented by using the kernel layer. The kernel layer includes at least a display driver, a touch driver, and the like. The display driver may control a display for display. The touch driver may obtain an operation event (for example, the first operation in FIG. 3A~FIG. 3C) of the touch sensor 180K (in FIG. 1), and upload information (for example, a touch position) about the operation event to the input manager service.

It should be noted that the schematic diagram of the software structure of the electronic device shown in FIG. 2 provided in this application is merely an example, and does not limit specific module division in different layers of the Android operating system. For details, refer to a description of a software structure of the Android operating system in conventional technologies. In addition, the display method provided in this application may alternatively be implemented based on another operating system, and examples are not provided in this application one by one.

A scenario in this embodiment of this application is a case that a user interface of a non-home screen application is switched to a user interface of the home screen. FIG. 3A~FIG. 3C illustrate a process in which the electronic device displays the user interface of the home screen application from the user interface of the non-home screen application. The user interface of the home screen application may include a home screen interface or a multi-task interface.

FIG. 3A~FIG. 3C are schematic diagrams of a group of user interfaces disclosed by way of example in an embodiment of this application. Displaying the user interface of the home screen application from the user interface of the non-home screen application (the first application) may include the following cases:

### Case 1: Exit a user interface of a first application to display the home screen interface of the home screen application.

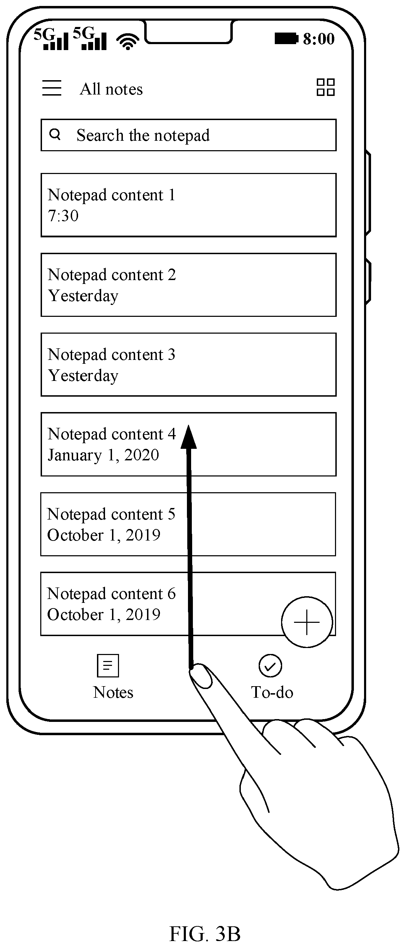

The user powers on the electronic device, and the electronic device may display the home screen interface. FIG. 3A is a schematic diagram of a home screen interface of the user in the electronic device. As shown in FIG. 3A, the electronic device may display icons of applications such as Clock, Calendar, Gallery, Notepad 311, Files, Email, Music, and Calculator. The user may tap an application icon of Notepad 311. In response to the foregoing operation of tapping the icon of Notepad 311, the electronic device may display a user interface of Notepad, as shown in FIG. 3B. Notepad is used as an example of the foregoing first application.

The user performs a first swipe-up operation (the first operation) on the user interface of Notepad, and the electronic device displays the home screen interface. As shown in FIG. 3A, in response to the first swipe-up operation of the user, the electronic device may display an animation of returning to the home screen from the user interface of Notepad. After the display of the animation ends, the home screen interface shown in FIG. 3A is displayed.

Optionally, the first swipe-up operation performed by the user on the user interface of the first application (Notepad) may alternatively be an operation such as a leftward swipe or a rightward swipe, may be an operation of returning to the home screen by tapping a home key or by tapping three-key navigation, or the like. This is not limited in this embodiment of this application.

### Case 2: Exit the user interface of the first application to display the multi-task interface of the home screen application.

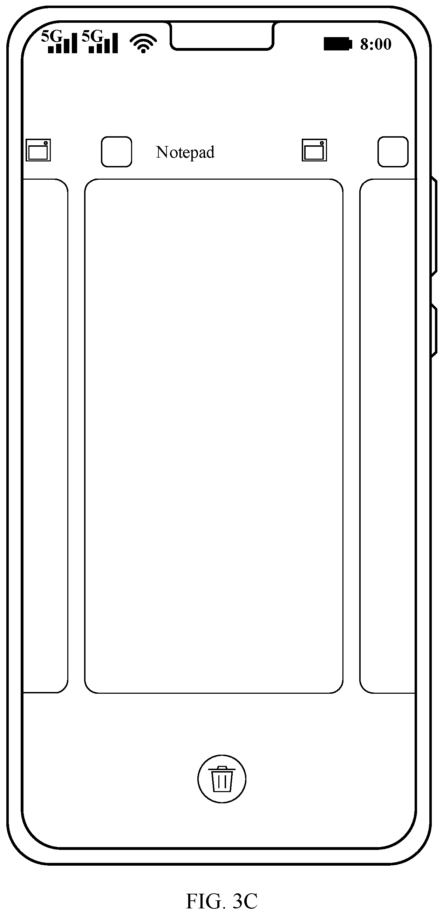

The user performs a second swipe-up operation (the first operation) on the user interface of Notepad, and the electronic device displays the multi-task interface. As shown in FIG. 3C, in response to the second swipe-up operation, the electronic device may display an animation of returning to the multi-task interface from the user interface of Notepad. In this case, when the animation ends, the multi-task interface shown in FIG. 3C is displayed.

Optionally, the second swipe-up operation performed by the user on the user interface of the first application (Notepad) may alternatively be an operation of returning to the multi-task interface by tapping the three-key navigation, or the like. This is not limited in this embodiment of this application.

It should be noted that the swipe-up operations in the case 1 and the case 2 are of different types, and therefore responses of the electronic device are different. In the case 1, a swipe-up process of the first swipe-up operation does not stop, and the electronic device may display the home screen interface shown in FIG. 3A. In the case 2, a swipe-up process of the second swipe-up operation stops, and the electronic device may display the multi-task interface shown in FIG. 3C.

### Case 3: Perform an unlocking operation on the lock screen interface to display the home screen interface of the home screen application.

Optionally, in addition to the processing processes in the case 1 and the case 2 described above, when the electronic device displays the lock screen interface, the user may perform touch-based unlocking (the first operation). In response to the unlocking operation of the user, an animation of entering the home screen interface may be displayed.

Optionally, the touch operation is used as an example of each of the foregoing first operations. An operation type may alternatively be another type such as a mid-air gesture operation or voice control. This is not limited in this application.

For the scenario of exiting a user interface of a current application to return to the home screen interface, as shown in FIG. 3A~FIG. 3C, when the Launcher switches from a background application to a foreground application, a home screen layer needs to be drawn first to display the home screen interface, and the electronic device can display the home screen interface only when drawing of the home screen layer is completed. In terms of duration from a user operation to display, a response speed at which the user switches from the interface of the first application to the home screen interface is low, leading to poor user experience.

Further, with reference to the foregoing software structure of FIG. 2, wmshell in the system user interface module (System UI) is upgraded in an Android operating system version 14. In the process of displaying the interface of the home screen application from another application interface by the electronic device, a wmshell.main thread needs to be invoked by the system user interface module during interaction between the home screen application and a system server. In threads related to wmshell, a binder thread needs to be invoked for interaction. An increase in a quantity of invoking times leads to a lower response speed of the first operation in the scenario shown in FIG. 3A~FIG. 3C. For example, the user swipes up to exit an application interface of Notepad. In response to a swipe-up operation, the electronic device displays a motion effect of returning to the home screen application. In the foregoing process, a processing process of wmshell in the system user interface module is added, which causes a longer response time for the swipe-up operation. After detection, when invoking of the wmshell.main thread in the system user interface module (System UI) is not required for interaction between the home screen application and the system server, the electronic device takes approximately 120 ms to perform the swipe-up operation. When the invoking of the wmshell.main thread in the system user interface module (System UI) is required for the interaction between the home screen application and the system server, the electronic device takes approximately 160 ms to perform the swipe-up operation. In comparison, a response time increases by approximately 40 ms. Therefore, upgrade of the system version leads to a lower response speed.

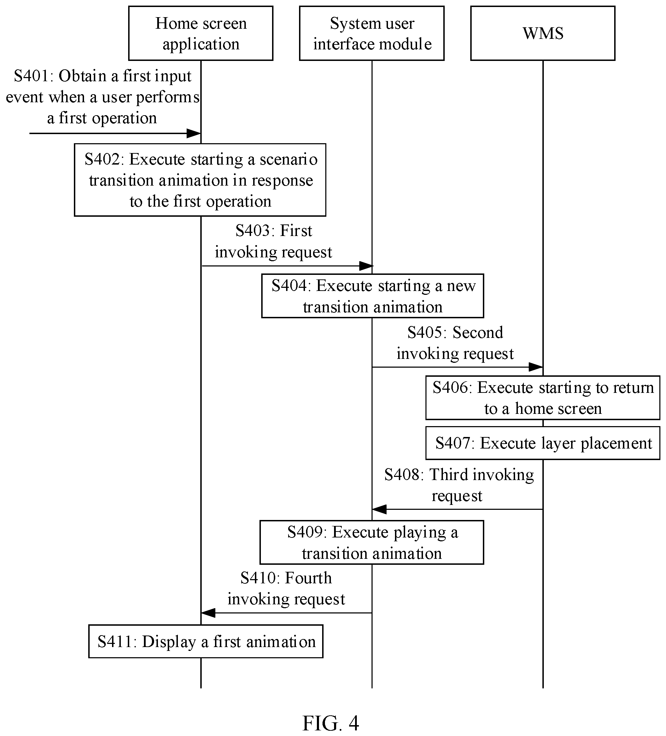

To further describe the foregoing problem of a long response processing procedure and a slow response time caused in the process in which the electronic device displays the home screen interface from the another application interface in response to the user operation, a specific description is provided with reference to the embodiment in FIG. 4.

FIG. 4 is a schematic flowchart of an interface switching method disclosed by way of example in an embodiment of this application. As shown in FIG. 4, the interface switching method may include the following steps.

The electronic device may include the home screen application, the system user interface module, and the WMS. For a specific description, refer to related content in FIG. 2. Details are not described again.

S401: When a user performs a first operation, a home screen application obtains a first input event.

The first operation is an operation of returning to the home screen. For example, in response to the first operation, the electronic device switches from displaying the user interface of the first application to displaying the user interface of the home screen application. For the first operation, refer to a related operation in FIG. 3A~FIG. 3C. Details are not described again. With further reference to the touch driver and the input manager service in FIG. 2, when obtaining the first operation, the touch driver may report the first input event of the first operation to the input manager service, and the input manager service may report the first input event of the first operation to the home screen application. In this way, the home screen application obtains the first input event.

S402: In response to the first operation, the home screen application executes starting a scenario transition animation.

startRecentsTransition for starting a scenario transition animation may start an animation. The starting scenario transition animation is a process of a transition animation of exiting, in response to the first operation, an interface of a current application to display the interface of the home screen application.

Optionally, in the process in which the home screen application executes, in response to the first operation, startRecentsAnimation for starting a scenario transition animation, startRecentsTransition is executed, that is, the scenario transition animation is started.

S403: The home screen application sends a first invoking request to a system user interface module.

The home screen application sends the first invoking request to the system user interface module by using an asynchronous binder thread, and the system user interface module receives the first invoking request from the home screen application by using the asynchronous binder thread. The first invoking request may include first operation information.

Callback of the asynchronous binder thread is a process of executing IRecentTasks recent tasks, and the first invoking request is used to request the wmshell.main thread to execute startNewTransition for starting a new transition animation.

S404: The system user interface module executes starting a new transition animation.

The system user interface module may execute a startNewTransition function for starting a new transition animation. startNewTransition is used to start a new transition animation, that is, a motion effect of returning to the home screen.

Optionally, after receiving the first invoking request, the system user interface module switches to the wmshell.main thread. Then, the system user interface module may execute startNewTransition by using the wmshell.main thread.

S405: The system user interface module sends a second invoking request to a WMS.

After executing startNewTransition, the system user interface module may send the second invoking request to the WMS by using a synchronous binder thread. Correspondingly, the WMS may receive the second invoking request from the system user interface module by using the synchronous binder thread.

The second invoking request may be used to be invoked by a system server (system server) process, to request to start to execute a startExitingRecents function for returning to the home screen.

S406: The WMS starts to execute returning to the home screen.

After receiving the second invoking request, the WMS may start to execute startExitingRecents for returning to the home screen. Optionally, the WMS may execute startExitingRecents by using the binder thread of the system_server process. startExitingRecents is used to start to return to the home screen. The second invoking request may include event information of the first operation, and in response to the first operation of switching from another application interface to the home screen, the WMS executes startExitingRecents.

S407: The WMS executes layer placement.

After executing startExitingRecents, the WMS may execute a layer placement function performSurfacePlacement. Optionally, after executing startExitingRecents, the WMS switches to an android.anim thread, and may execute performSurfacePlacement by using the android.anim thread.

As a core function in the WMS, performSurfacePlacement may be responsible for placement of positions and layers of surfaces of all windows window. When window size calculation and window drawing state update are performed on all existing windows (that is, when a window state changes), performSurfacePlacement needs to be executed to update the surface in the window. It may be understood that, when the window state changes, the WMS may trigger execution of performSurfacePlacement.

In a process of executing performSurfacePlacement, the electronic device may traverse all windows of the home screen application, determine whether the window obtains a FinishDraw notification of drawing completion. Motion effect readiness processing OnTransactionReady is executed only after the FinishDraw notification is obtained, to display a motion effect to return to the home screen interface. Otherwise, when the FinishDraw notification is not obtained, onTransactionReady is not executed and the animation is not displayed. onTransactionReady is used to trigger display of a motion effect. In other words, onTransactionReady may indicate that drawing of the home screen window is completed and processing is ready, and the animation may start to be displayed.

S408: The WMS sends a third invoking request to the system user interface module.

After executing onTransactionReady, the WMS may send the third invoking request to the system user interface module by using the asynchronous binder thread. Correspondingly, the system user interface module receives the third invoking request from the WMS by using the asynchronous binder thread.

The third invoking request is used to request to play an animation.

S409: The system user interface module executes playing a transition animation.

Optionally, the system user interface module may execute, by using the wmshell.main thread, a playTransition function for playing a transition animation.

playTransition is playing a transition animation, and is used to execute playing a transition motion effect of the first operation.

S410: The system user interface module sends a fourth invoking request to the home screen application.

After the system user interface module executes playTransition, the system user interface module sends the fourth invoking request to the home screen application by using the asynchronous binder thread. Correspondingly, the home screen application receives the fourth invoking request from the system user interface module by using the asynchronous binder thread.

The fourth invoking request is used to request to invoke an onAnimationStart function for starting to display a motion effect.

S411: The home screen application displays a first animation.

After receiving the fourth invoking request, the home screen application may switch to a home screen main thread, and the home screen application may execute, by using the home screen main thread, onAnimationStart for starting to display a motion effect. In this case, the home screen application displays the first animation.

The first animation may be an animation of switching from another application interface to the home screen interface in FIG. 3A~FIG. 3C, and a specific display manner of the animation is not limited in this application.

In the implementation of FIG. 4, when startExitingRecents and performSurfacePlacement are executed, it is necessary to wait for obtaining the FinishDraw notification of drawing completion before the first animation can be displayed. A long waiting time indicates a long time required for response. Further, interaction between the home screen application and the WMS needs to be performed by using the wmshell.main thread of the system user interface module, and a plurality of invoking processes of the binder thread are added. Consequently, a long processing procedure and a large quantity of interaction times lead to a longer corresponding response time. Therefore, a response time of the electronic device for the first operation is long, and responsiveness to a motion effect is poor.

To resolve the foregoing problems, embodiments of this application disclose an interface switching method and an electronic device. The electronic device may display a first interface, where the first interface is an interface of a home screen application, and the first interface includes an icon of the first application. A second interface of the first application is displayed in response to a first operation performed on the icon of the first application in the first interface. After the second interface is displayed, a layer of the first interface is not destroyed. A first animation of returning to the first interface is displayed in response to a second operation of returning to the first interface. Before a notification of drawing completion is obtained, the first animation starts to be displayed. The second interface of the first application is displayed in response to the first operation performed on the icon of the first application in the first interface. The layer of the first interface is not destroyed after the second interface is displayed. A third interface is displayed in response to an operation of rotating a screen, where the third interface is a landscape interface of the second interface. A second animation of returning to the first interface is displayed in response to the second operation of returning to the first interface. After the notification of drawing completion is obtained, the second animation starts to be displayed. In this way, based on a case that the home screen layer is not destroyed, a waiting response time for the first operation is reduced, and responsiveness to the user operation is improved.

To resolve the foregoing problem in FIG. 4 that a response to the swipe-up operation of exiting an application interface is slow, with reference to a user scenario in FIG. 3A~FIG. 3C and the software structure of the electronic device in FIG. 2, FIG. 5A and FIG. 5B describe an interface switching method. In this method, when receiving the first operation, the electronic device determines whether a condition that a scenario state mark is true, the home screen layer is not destroyed, and the waiting change flag bit is false is met. When the foregoing condition is met, the first operation may be responded in advance without a need to wait for completion of drawing a motion effect, to display a motion effect of returning to the home screen application. In this way, based on the case that the home screen layer is not destroyed, the waiting response time for the first operation is reduced, and the responsiveness to the user operation is improved.

FIG. 5A and FIG. 5B are schematic flowcharts of an interface switching method disclosed by way of example in an embodiment of this application. As shown in FIG. 5A and FIG. 5B, the interface switching method may include but is not limited to the following steps.

The electronic device may include the home screen application, the system user interface module, and the WMS. For a specific related description, refer to related content in FIG. 2. Details are not described again.

S501: When a user performs a first operation, a home screen application obtains a first input event.

The first operation is an operation of exiting the user interface of the first application and displaying the user interface of the home screen application by the electronic device. For the first operation, refer to related operations in the three cases in FIG. 3A~FIG. 3C. Details are not described again. The user interface of the home screen application may include the multi-task interface shown in FIG. 3C and the home screen interface shown in FIG. 3A.

S502: In response to the first operation, the home screen application executes starting a scenario transition animation.

S503: The home screen application sends a first invoking request to a system user interface module.

S504: The home screen application executes starting a new transition animation.

S505: The system user interface module sends a second invoking request to a WMS.

For S501~S505, sequentially refer to the related content in S401~S405 correspondingly. Details are not described again.

After obtaining the second invoking request, the system user interface module may execute startExitingRecents. When a result of executing startExitingRecents is not displaying a motion effect, the FinishDraw notification of drawing completion continues to be waited for to execute performSurfacePlacement. Both startExitingRecents and performSurfacePlacement invoke a tryFinish function for attempting completion. The tryFinish function includes an isSyncFinished function for synchronization completion determining. When isSyncFinished=true or all home screen windows are drawn HasDraw, a loop process of invoking tryFinish is skipped, and motion effect readiness processing onTransactionReady is executed. When isSyncFinished=false and not all windows are HasDraw, the FinishDraw notification is waited for to trigger execution of performSurfacePlacement, that is, tryFinish is executed again (the loop is entered). tryFinish is used to determine whether to execute onTransactionReady. The following describes in detail a process of executing tryFinish by using S506~S508.

S506: Determine whether to return to the home screen, whether a home screen layer is not destroyed, and whether a window state is unchanged. When the scenario state is returning to the home screen, the home screen layer is not destroyed, and the window state is unchanged, S509 is performed. When the scenario state is not the returning to the home screen, the home screen layer is already destroyed, or the window state changes, S507 is performed.

S506 is a process in which the WMS executes isSyncFinished for synchronization completion determining. isSyncFinished includes the following three determining conditions: whether the scenario state is returning to the home screen, whether the home screen layer is not destroyed, and whether the window state is unchanged. When the three determining conditions are all met, the electronic device sets isSyncFinished to true, and performs S509; and when one of the determining conditions is not met, the electronic device sets isSyncFinished to false, and performs S507.

First, whether the scenario state is returning to the home screen is determined by determining whether a scenario state flag bit mStartExitingRecents is true.

The scenario state flag bit mStartExitingRecents can indicate a user scenario corresponding to the first operation. When the first operation is an operation of switching from another application interface to the home screen interface, the electronic device may execute StartExitingRecents to set mStartExitingRecents to true. After execution of StartExitingRecents is completed, mStartExitingRecents is set to false. In this way, determining of the scenario state flag bit can ensure that an operation scenario corresponds to an operation scenario of returning to the home screen, ensure a necessity of subsequent two times of determining and feasibility of performing S509 in advance, thereby further ensuring effectiveness of triggering the motion effect in advance and accuracy of the scenario.

Second, a process of determining whether the home screen layer is not destroyed.

A manner of determining whether the home screen layer is not destroyed is not limited. The following describes several possible manners.

Manner 1: The WMS determines whether package name information of the home screen is a preset package name. When the package name information of the home screen is the preset package name, the WMS may determine that the home screen layer is not destroyed. When the package name information of the home screen is not the preset package name, the WMS may determine that the home screen layer is already destroyed.

Manner 2: The WMS determines whether a target window name is a preset window name. When the target window name is the preset window name, the WMS may determine that the home screen layer is not destroyed. The target window name is a window name of the home screen application that needs to be displayed by the electronic device in response to the first operation, and the preset window name is a window of the Launcher for executing non-destruction of the layer. When the target window name is not the preset window name, the WMS may determine that the home screen layer is already destroyed.

Optionally, the electronic device may first determine whether a device property supports non-destruction of the home screen layer. When the device property does not support non-destruction of the home screen layer, the electronic device may determine that the home screen layer is already destroyed. When the device property supports non-destruction of the home screen layer, whether the target window name is the preset window name continues to be determined. When the target window name is the preset window name, the WMS may determine that the home screen layer is not destroyed; and when the target window name is not the preset window name, the WMS may determine that the home screen layer is already destroyed.

Manner 3: The WMS determines whether an mDestroying state is an undestroyed state. When mDestroying=false, it may be determined that the home screen layer is not destroyed. In other words, when mDestroying=false, it indicates that the home screen layer is not destroyed. When mDestroying=true, it may be determined that a current home screen layer is destroyed.

The foregoing several manners of determining whether the home screen layer is not destroyed are merely example descriptions and are not limited. The foregoing determining that the home screen layer is not destroyed can ensure that, when display starts to be performed without waiting for completion of drawing, there is an existing home screen layer available for display, which ensures a premise and reliability of stable display.

Third, whether the window state is unchanged is determined by determining whether the waiting change flag bit mWaitingConfigchange is false.

The waiting change flag bit mWaitingConfigchange is a mark indicating that the window state changes in a waiting process. When mWaitingConfigchange=false, it indicates that the window state is not changed; and when mWaitingConfigchange=true, it indicates that the window state changes. When the window state changes, that is, when mWaitingConfigchange=true, the electronic device needs to perform S507, and continues to determine whether the changed window obtains the finishDraw notification. When the window state is unchanged, the electronic device performs processing with reference to determining results of the other two conditions, that is, does not perform processing. In this way, when the window state is unchanged, that is, when mWaitingConfigchange=false, S507 and S508 may not need to be performed, and S509 is directly performed, thereby reducing a response waiting time for the first operation and improving the operation responsiveness. When the window state changes, that is, when mWaitingConfigchange=true, S507 and S508 may need to be performed to determine whether drawing of a current home screen is completed based on a latest configuration parameter, and S509 is performed only after drawing is completed. This can ensure that a display interface of the scenario of returning to the home screen is a latest adjusted home screen interface, thereby ensuring timeliness and stability of display.

The window state may mark a graphic position, an image size, a shape, and the like in the window. When the window state changes, it may be determined that drawing of the window is completed. If further drawing and display are required when the window state changes, performSurfacePlacement needs to be executed.

The home screen layer is not destroyed when the electronic device displays the interface of the first application and the home screen application runs in the background. However, a user operation performed by the user on the interface of the first application may change the window state of the home screen. For example, the user sets the display mode to another mode (for example, sets to a dark mode from a light mode) different from a current display mode of the home screen, changes the home screen wallpaper, changes the home screen layout (the home screen layout is an arrangement manner of home screen icons), or the like. In response to the foregoing operation, the electronic device may obtain a window state change event. After drawing the window, the Launcher needs to deliver the FinishDraw notification to the WMS. Therefore, determining of the waiting change flag bit can ensure stability of display, prevent a process of immediate re-drawing and re-display after the motion effect is displayed, and avoid screen flickering.

After the foregoing three determining processes, when mStartExitingRecents=true, the home screen layer is not destroyed, and mWaitingConfigchange=true, S509 is performed.

Performing S506 for the first time in response to the first operation is a process of executing StartExitingRecents, and performing S506 again is a process of executing performSurfacePlacement.

Optionally, isSyncFinished may include at least a condition that the home screen layer is not destroyed, and may selectively include the remaining conditions that mWaitingConfigchange=false, and mStartExitingRecents=true.

S507: The WMS determines whether all windows of the home screen are drawn.

The electronic device may traverse all windows of the home screen application, and determine whether all windows of the home screen application are Has Draw. When all windows are Has Draw, S509 may be performed. When there is a window that is not Has Draw (there is a window in a non-Has Draw state), S508 continues to be performed.

The windows of the home screen application may include a leftmost home screen, an icon (of an application), a wallpaper, a status bar, and another window. A window drawing mark may include Has Draw (drawn), No surface, Draw pending (to be drawn), commit Draw pending, ready to show, and the like. Has Draw indicates that drawing of the window is completed. After drawing of a main window of the home screen application is completed, the FinishDraw notification is sent to the WMS, and a drawing state of the window is marked as Has Draw.

S508: The WMS waits for obtaining a notification of drawing completion.

In a process in which the WMS executes performSurfacePlacement, when the WMS waits for the FinishDraw notification of drawing completion from the Launcher (that is, the window state changes), S506 is performed. When the FinishDraw notification from the Launcher is not obtained (that is, the window state is unchanged), no processing is performed and just wait. The process of performing S506 continues and a next loop is entered.

After the notification of drawing completion is obtained in S508, S509 is performed, that is, the motion effect readiness processing onTransactionReady is executed.

Optionally, when obtaining the FinishDraw notification from the Launcher, the WMS sets mWaitingConfigchange to false. It is ensured that after the first operation is obtained again, isSyncFinished may be executed in S506 to determine that isSyncFinished=true. In this way, stability of displaying, in advance, the motion effect of returning to the home screen can be ensured by performing three determining processes of StartExitingRecents in S506.

Optionally, when S508 is performed and the window state changes, and when the WMS obtains the FinishDraw notification from the Launcher, the electronic device may perform step S507. Therefore, the process of performSurfacePlacement may include S507~S508, and does not include the determining process in S506.

In the foregoing S506, when the window state changes, that is, when isSyncFinished=false, S509 is not performed. The electronic device waits until the notification of drawing completion is obtained, and executes performSurfacePlacement again. Display is performed only when it is determined that re-drawing of the window caused by the changed window state is completed. In this way, displayed content can adapt to a requirement of a latest adjustment, and stability and reliability of display are ensured.

S509: The WMS executes motion effect readiness processing.

In S506, if the electronic device determines that mStartExitingRecents=true, the home screen layer is not destroyed, and mWaitingConfigchange=false, the electronic device may perform S509. Alternatively, in S507, when it is determined that all windows are in the Has Draw state, S509 is performed.

OnTransactionReady indicates that an animation is ready, and the electronic device may start to display the motion effect (perform S511~S513).

In a process of performing the foregoing S506~S509, the electronic device may determine that the home screen layer is not destroyed, and perform display based on the undestroyed home screen layer, thereby reducing a time consumed for creating the home screen window, displaying the home screen more quickly, and improving a responsiveness performance speed of returning to the home screen.

With reference to FIG. 4, it may be obtained that the electronic device may execute startExitingRecents by using the binder thread of the system server (system server) process, and execute performSurfacePlacement by using the android.anim thread.

S510: The WMS sends a third adjustment request to the system user interface module.

S511: The system user interface module executes playing a transition animation.

S512: The system user interface module sends a fourth adjustment request to the home screen application.

S513: The home screen application displays a first animation.

For a processing process in S511~S513, sequentially refer to related content of S408~S411. Details are not described again.

In this embodiment of this application, based on a premise that the home screen layer is not destroyed, when the first operation triggers execution of StartExitingRecents, if mStartExitingRecents=false, the home screen layer is already destroyed, or mWaitingConfigchange=false, the electronic device may directly display the undestroyed home screen layer without a need to wait for a drawing process of the home screen layer, which reduces a waiting time, thereby increasing a response speed, improving responsiveness to the first operation, and improving user experience.

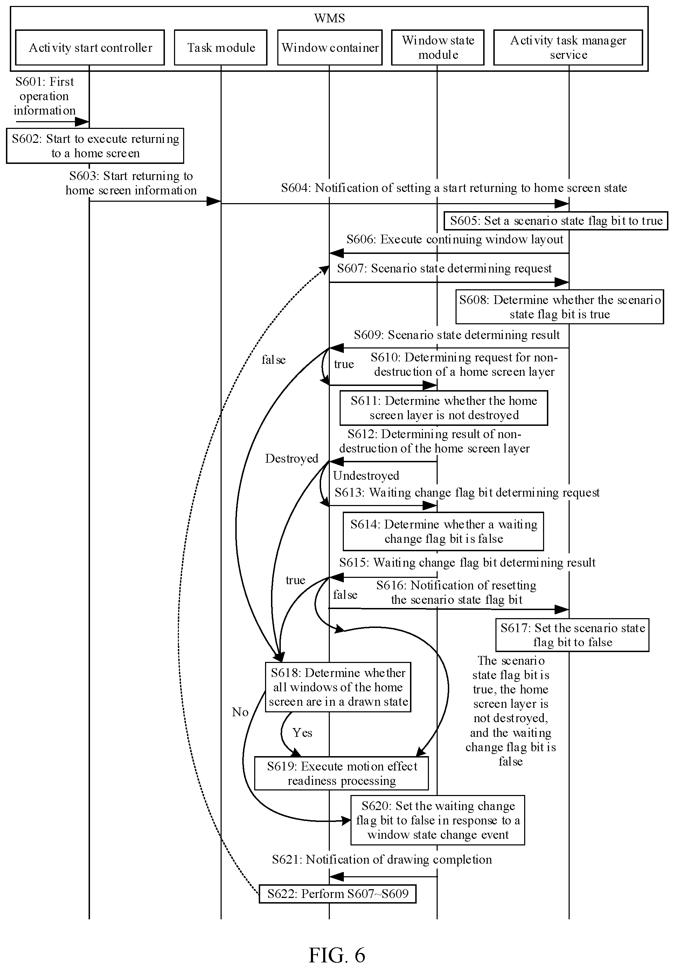

With reference to S506~S509 in FIG. 5A and FIG. 5B, FIG. 6 discloses a specific implementation of executing startExitingRecents and performSurfacePlacement. The following provides detailed description with reference to FIG. 5A and FIG. 5B.

FIG. 6 is a schematic flowchart of performing an interface switching method disclosed in an embodiment of this application. As shown in FIG. 6, the method may include but is not limited to the following steps.

The WMS of the electronic device may implement the processing process in S506~S509 by invoking a plurality of classes of the WMS, for example, an activity start controller (activity start controller), a task (task) module, a window container (window container), a window state (window state) module, and an activity task manager service (activity task manager service), which are specifically described with reference to the following steps.

S601: An activity start controller obtains first operation information.

For a process of obtaining the first operation information in S601, refer to content of the second invoking request in S505 and S405, and the second invoking request may indicate that the first operation information is currently obtained.

S602: The activity start controller starts to execute returning to a home screen.

After receiving the first operation information, the activity start controller triggers to start to execute startExitingRecents for returning to the home screen.

S603: An activity task manager service sends start returning to home screen information to a task module.

The start returning to home screen startExitingRecents information requests to execute startExitingRecents.

S604: The task module sends the activity task manager service a notification of setting a start returning to home screen state.

S605: The activity task manager service sets a scenario state flag bit to true.

Based on the notification of setting the start returning to home screen state startExitingRecentsState, the activity task manager service sets the scenario state flag bit mStartExitingRecents to true. It may be determined that a current scenario state is a scenario state of returning to the home screen, and the scenario state flag bit mStartExitingRecents may be set to true. mStartExitingRecents can indicate whether the scenario state is returning to the home screen. When mStartExitingRecents=true, it indicates that the scenario state is returning to the home screen (that is, a scenario corresponding to the first operation of returning to the home screen interface from application interface). When mStartExitingRecents=false, it indicates that the scenario state is not the scenario of returning to the home screen, or execution of the scenario processing ends.

S606: The activity task manager service executes continuing window layout.

In the process of executing startExitingRecents, the activity task manager service executes continueWindowLayout for continuing window layout. continueWindowLayout is used to initiate performSurfacePlacement, and performSurfacePlacement starts tryFinish and executes isSyncFinished.

When the window container executes startExitingRecents, a process of determining whether mStartExitingRecents is true (S607~S609), whether the home screen layer is destroyed (S610~S612), and whether mWaitingConfigchange is true (S613~S615) is performed in S506. With reference to FIG. 5A and FIG. 5B, a processing process shown in FIG. 6 is specifically described.

S607: A window container sends a scenario state determining request to the activity task manager service.

The window container may invoke an isStartExitingRecents function from the activity task manager service. The scenario state determining request is the isStartExitingRecents function, and is used to request to determine whether mStartExitingRecents is true.

S608: The activity task manager service determines whether the scenario state flag bit is true.

For content of S608, refer to a related process in S506 of determining whether mStartExitingRecents is true. Details are not described again.

S609: The activity task manager service sends a scenario state determining result to the window container.

The scenario state determining result may include two results: mStartExitingRecents=true, or mStartExitingRecents=false. When mStartExitingRecents=false, S618 is directly performed. When mStartExitingRecents=true, S610 continues to be performed.

S610: The window container sends a determining request for non-destruction of the home screen layer to the window state module.

The window container invokes the isPermanentLauncher function from the window state module. The determining request for non-destruction of the home screen layer is the isPermanentLauncher function, and is used to request to determine whether the home screen layer is not destroyed.

S611: The window state module determines whether the home screen layer is not destroyed.

For a method for determining whether the home screen layer is not destroyed, refer to a specific method in S506 for determining whether the home screen layer is not destroyed. Specifically, the window state module may perform determining based on whether package name information of the home screen is a preset package name, whether a window name of the home screen is a preset window name, whether an mDestroying destruction flag bit is false, and the like. When layer destruction information is preset information (the preset package name, the preset window name, and the preset flag bit are false), it may be determined that the home screen layer is not destroyed; otherwise, the home screen layer is destroyed.

S612: The window state module sends a determining result of non-destruction of the home screen layer to the window container.

The determining result of non-destruction of the home screen layer includes two results: not destroyed and destroyed. When the home screen layer is not destroyed, S613 continues to be performed. When the home screen layer is destroyed, S618 is performed directly.

S613: The window container sends a waiting change flag bit determining request to the window state module.

The window container invokes the isWaitingConfigchange function from the window state module. The waiting change flag bit determining request, that is, the isWaitingConfigchange function, is used to request to determine whether mWaitingConfigchange is false.

S614: The window state module determines whether the waiting change flag bit is false.

For a related description of S614, refer to the process in S506 of determining whether mWaitingConfigchange is false. Details are not described again.

In a possible case, due to execution of a configchangeupdateResizingWindowlfNeeded function for configuration update when window size adjustment is required, mWaitingConfigchange is set to true. For example, during rotation of a screen of a foldable-screen device, configchangeupdateResizingWindowlfNeeded is executed, and mWaitingConfigchange is set to true. In this case, a determining result of S614 is true, and the home screen needs to wait for being drawn instead of being displayed directly. This can ensure that after rotation, display is performed after adjustment of a size of the home screen window is completed, thereby avoiding a screen flickering problem caused by direct display and ensuring stability and reliability of display.

For example, if the electronic device is a foldable-screen device, the electronic device displays the home screen application in a first direction (for example, a portrait display interface). The user taps the first application, and the electronic device displays an application interface of the first application. The electronic device may not destroy the home screen layer in the background. In the application interface of the first application, the user rotates the electronic device, or a display direction is automatically adjusted. The electronic device may display (for example, a landscape display interface) the application interface of the first application in a second direction, and the electronic device may set mWaitingConfigchange to true. When the user performs the first operation on the first application interface in the second direction, StartExitingRecents is executed. When S614 is performed, it is determined that the waiting change flag bit is true. In this case, S619 cannot be performed in advance, and it is necessary to wait for completion of drawing the home screen window. This can ensure that after rotation, display is performed after adjustment of the size of the home screen window is completed, thereby avoiding the screen flickering problem caused by direct display.

S615: The window state module sends a waiting change flag bit determining result to the window container.

The waiting change flag bit determining result includes two results: mWaitingConfigchange=true, or mWaitingConfigchange=false. When mWaitingConfigchange=false, S618 is performed; otherwise, S619 is further performed based on results of the three determining processes.

In a determining process in S613~S615, mWaitingConfigchange indicates whether the window state changes. When the window state changes, that is, when mWaitingConfigchange=true, it is necessary to further wait for drawing of the home screen window to adapt to a latest changed window picture, and it is necessary to further determine whether all windows of the home screen are in the Has Draw state. If all windows of the home screen are in the Has Draw state, that is, when mWaitingConfigchange=false, it is not necessary to wait for drawing of the home screen window, which can ensure timeliness of display of the home screen window.

In the foregoing S607~S615, a sequence of the three determining processes, that is, determining whether mStartExitingRecents is true (S607~S609), whether the home screen layer is destroyed (S610~S612), and whether mWaitingConfigchange is true (S613~S615) is not limited in this application. In the three determining conditions, S619 is performed only when all three conditions are met: mStartExitingRecents=true, the home screen layer is not destroyed, and mWaitingConfigchange=false. Otherwise, if any one of the conditions is not met, S618 is performed.

S616: The window container sends a notification of resetting a scenario state flag bit to the activity task manager service.

The notification of resetting the scenario state flag bit may be understood as completion of a current StartExitingRecents process.

S617: The activity task manager service sets the scenario state flag bit to false.

In S602~S606, startExitingRecents starts to be executed, and the scenario state flag bit mStartExitingRecents is set to true. After the determining in S607~S615 is completed, execution of StartExitingRecents is completed. The WMS performs S616 and S617 to set StartExitingRecents to false, which indicates that execution of current StartExitingRecents triggered by the first operation is completed. In a subsequent process of performSurfacePlacement, there is no need to perform processes of S616 and S617, that is, mStartExitingRecents is not set.

S618: The window container determines whether all windows of the home screen are in the drawn state. When all windows are in the drawn state, S619 is performed. When any home screen window is not in the drawn state, no processing is performed and a process of S607 is performed again when the window state changes (S620).

For a determining process in S618, refer to a related description in S507 of determining whether all windows of the home screen are Has Draw. Details are not described again.

S619: The window container executes motion effect readiness processing.

For S619, refer to a related description in S509 of executing onTransactionReady. Details are not described again.

S620: The window state module sets the waiting change flag bit to false in response to a window state change event.

The window state change event means that the WMS receives the FinishDraw notification from the home screen application, and the FinishDraw notification triggers to perform S620~S622. For S602, refer to a related description in S508.

After S619 is performed, S620 is performed to indicate that processing of onTransactionReady and WaitingConfigchange is completed. Therefore, mWaitingConfigchange may be set to false. In this way, when the first operation is obtained next time, the process of StartExitingRecents may be effectively performed, and a determining result of S614 is true, thereby ensuring stability of triggering a motion effect in advance.

After obtaining the window state change event, the window state module may set mWaitingConfigchange to false. There are many cases for the window state change event, which can be triggered when the window state changes. For example, the window state change event is a relayoutWindow invoking event. relayoutWindow means laying out a window again. When receiving a relayoutWindow invoking event, the Launcher may send a FinishDraw notification to the WMS. The window state module may perform S620 in response to the window state change event of the FinishDraw notification.

S621: The window state module sends a notification of drawing completion to the window container.

The FinishDraw notification of drawing completion triggers to start to execute performSurfacePlacement.

For a processing process in S620~S622, refer to a processing process in S508. Details are not described herein.

S622: The window container performs S607~S609.

In S622, when the FinishDraw notification is obtained, the window container may be triggered to perform a determining process in S607~S609, and execute isSyncFinished again. After determining, logic of S607~S609 and S618 is executed.

Optionally, S622: S618 is performed again, and S607~S609 are not performed. In this way, the determining process in S607~S609 is reduced, the determining process is simplified, and processing efficiency is improved. Further, optionally, processes of S604~S609, S616, and S617 may not be performed in FIG. 6. Determining of isSyncFinished includes two determining logic of S610~S615, and S622 is adjusted to perform S618. In this way, processing logic can be simplified, and the processing efficiency can be improved.

Optionally, step S608 may be performed after a determining result of S618 is false. Before the determining in S618 is performed, mStartExitingRecents is already set to false in S617, and a determining result of S608 is false. In this case, S618 continues to be performed again. An execution sequence of S607~S609 and S620~S622 in the loop may be not limited. In this application, S620~S622 are first performed, and S607~S609 are performed later. Alternatively, S607~S609 may be performed first, and S620~S622 are performed later.

With reference to FIG. 5A, FIG. 5B, and FIG. 6, it should be noted that, in the process in which StartExitingRecents is executed, because mStartExitingRecents is set to true in S605, the determining result of S608 is true, and subsequent determining for executing performSurfacePlacement is main determining. When a result of executing isSyncFinished within StartExitingRecents is false, for example, after the home screen layer is not destroyed (the home screen layer is a display layer in a portrait direction), the user rotates the screen, and the electronic device displays a rotated screen interface (in a landscape direction). If a swipe-up operation is performed on the landscape interface to return to the home screen, a result of isSyncFinished is false, and the electronic device sets mStartExitingRecents to false. After performSurfacePlacement is executed, and in a process in which S607 is performed again, a result of mStartExitingRecents is false. In this case, two determining processes in S610~S615 can be skipped, and S618 is performed directly. Therefore, when the home screen layer is not destroyed, the user returns to the home screen after rotating the screen. In a determining process of isSyncFinished, S607~S609 are performed first, and S610~S615 are performed later. Such an execution sequence can reduce determining processes of the other two conditions, thereby simplifying the processing process and improving the processing efficiency. Optionally, in the process of triggering to execute performSurfacePlacement in S620, the execution may start directly from S618 without a need to determine the conditions of isSyncFinished described above, thereby simplifying the determining process and improving the processing efficiency.

In the foregoing implementation, based on a fact that the home screen layer is not destroyed when the home screen application switches from the foreground to the background, the electronic device may determine, when switching back to the home screen from another application interface again, whether the undestroyed home screen window can be directly displayed. When the undestroyed home screen window can be directly displayed, the electronic device does not need to wait for completion of drawing the home screen layer, but directly displays the undestroyed home screen layer. In this way, a response speed of switching from another application to the home screen application can be increased, a waiting time for drawing the home screen layer is reduced, and responsiveness is improved.

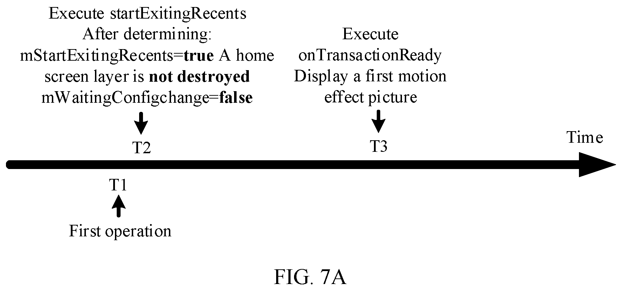

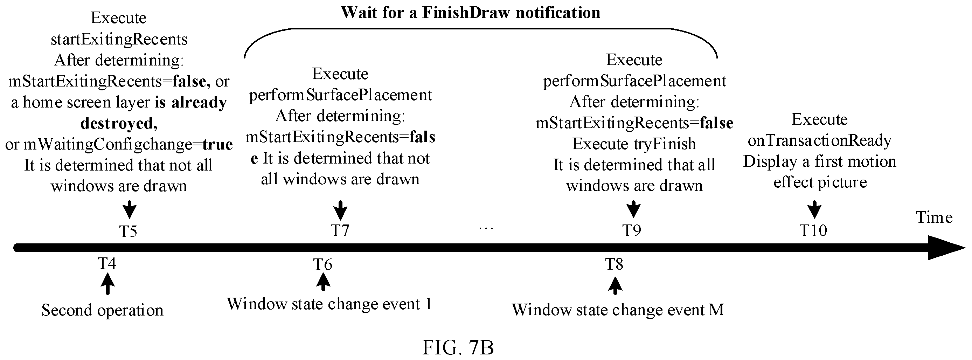

With reference to the embodiments of FIG. 5A, FIG. 5B, and FIG. 6, it is described that in FIG. 7A, when the conditions that mStartExitingRecents=true, the home screen layer is not destroyed, and mWaitingConfigchange=false are all met, there is no need to wait for completion of drawing the home screen window, and the undestroyed home screen layer is directly displayed. It is described that in FIG. 7B, when any one of the conditions that mStartExitingRecents=true, the home screen layer is not destroyed, and mWaitingConfigchange=false is not met, it is necessary to wait for completion of drawing the home screen window, and then the drawn home screen window is displayed.

FIG. 7A and FIG. 7B are a group of schematic diagrams of a display procedure for switching an interface disclosed in an embodiment of this application.

As shown in FIG. 7A, before a moment T1, when the home screen is displayed, the user displays an interface of a first application in response to an operation of starting the first application. At the moment T1, the electronic device receives a first operation of returning to the home screen by the user. At a moment T2, the electronic device executes startExitingRecents in response to the first operation. It is determined that mStartExitingRecents=true, the home screen layer is not destroyed, and mWaitingConfigchange=false. In this case, the electronic device does not need to wait for completion of drawing the home screen application. At a moment T3, the electronic device executes onTransactionReady and displays a first animation based on the undestroyed home screen layer.

As shown in FIG. 7B, before a moment T4, when the home screen is displayed, the user displays an interface of a second application in response to an operation of starting the second application. At the moment T4, the electronic device receives a second operation of returning to the home screen by the user, and executes startExitingRecents in response to the second operation at a moment T5. It is determined that mStartExitingRecents=false, the home screen layer is already destroyed, or mWaitingConfigchange=ture. Execution of startExitingRecents is completed. Based on the foregoing result, the electronic device performs S618, and a determining result is that not all windows are HasDraw. In this case, the electronic device waits for the window state change event to trigger performSurfacePlacement. At a moment T6, the electronic device obtains a window state change event 1, and executes performSurfacePlacement. It is determined that mStartExitingRecents=false, and a result obtained by continuing to perform S618 is also that not all windows are HasDraw. A result obtained by triggering S618 for a plurality of times is also that not all windows are HasDraw. Afterwards, the electronic device obtains a window state change event M (M is an integer greater than 1) at a moment T8. At a moment T9, performSurfacePlacement is executed. A result obtained by continuing to perform S618 is also that all windows are HasDraw. In this case, it is determined that the drawing of the home screen window is completed. After all windows are HasDraw, at a moment T10, the electronic device executes onTransactionReady, and displays a second animation based on the drawn home screen window.

The first application and the second application may be a same application or different applications, which is not limited.

It is found, through comparison between FIG. 7A and FIG. 7B, that when the Launcher is in the background, and the home screen layer is not destroyed, the electronic device directly displays a motion effect without a need to wait for completion of drawing the home screen layer, which significantly reduces a time for displaying the home screen and improves responsiveness.

It should be noted that, for brief description, the foregoing method embodiments are described as a series of action combinations. However, a person skilled in the art should understand that the present invention is not limited to the described action sequence. In addition, a person skilled in the art should also understand that all the embodiments described in the specification are preferred embodiments, and actions used are not necessarily required by the present invention. The implementations of this application may be arbitrarily combined to achieve different technical effects.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the processes of the methods in the foregoing embodiments may be implemented by a computer program instructing related hardware. The program may be stored in a computer-readable storage medium. When the program is executed, the processes in the foregoing method embodiments may be included. The foregoing storage medium includes any medium that can store program code, for example, a ROM, a random access memory RAM, a magnetic disk, or an optical disc.

In conclusion, the foregoing descriptions are only embodiments of the technical solutions of the present invention, and are not intended to limit the protection scope of the present invention. Any modifications, equivalent replacements, improvements, or the like made based on the disclosure of the present invention shall fall within the protection scope of the present invention.

## Claims

1. An interface switching method, wherein the method is applied to an electronic device, and the method comprises:
displaying, by the electronic device, a first interface, wherein the first interface is an interface of a home screen application, and the first interface comprises an icon of a first application;
displaying a second interface of the first application in response to a first operation performed on the icon of the first application in the first interface, wherein after the second interface is displayed, a layer of the first interface is not destroyed;
displaying, in response to a second operation of returning to the first interface, a first animation of returning to the first interface, wherein before a notification of drawing completion is obtained, the first animation starts to be displayed;
displaying the second interface of the first application in response to a third operation performed on the icon of the first application in the first interface, wherein the layer of the first interface is not destroyed after the second interface is displayed, and a display configuration of the home screen application is changed after the second interface is displayed; and
after the display configuration of the home screen application is changed, displaying, in response to a fourth operation of returning to the first interface, a second animation of returning to the first interface, wherein after the notification of drawing completion is obtained, the second animation starts to be displayed.

2. The method according to claim 1, wherein the displaying, in response to a second operation of returning to the first interface, a first animation of returning to the first interface comprises:
displaying, by the electronic device in response to the second operation of returning to the first interface, before the notification of drawing completion is obtained, and based on a fact that a condition that the layer of the first interface is not destroyed and a window state of the home screen application is unchanged is met, the first animation of returning to the first interface.

3. The method according to claim 2, wherein the displaying, in response to a fourth operation of returning to the first interface, a second animation of returning to the first interface comprises:
displaying, by the electronic device in response to the fourth operation of returning to the first interface, after the notification of drawing completion is obtained, and based on a fact that the condition that the layer of the first interface is not destroyed and the window state of the home screen application is unchanged is not met, the second animation of returning to the first interface.

4. The method according to claim 2, wherein the displaying, by the electronic device in response to the second operation of returning to the first interface, before the notification of drawing completion is obtained, and based on a fact that a condition that the layer of the first interface is not destroyed and a window state of the home screen application is unchanged is met, the first animation of returning to the first interface comprises:
in response to the second operation of returning to the first interface, starting, by the electronic device, to execute returning to the home screen;
determining, by the electronic device, whether the layer of the first interface is not destroyed and whether the window state of the home screen application is unchanged; and
when the condition that the layer of the first interface is not destroyed and the window state of the home screen application is unchanged is met, executing, by the electronic device, motion effect readiness processing, and thereafter displaying the second animation of returning to the first interface.

5. The method according to claim 3, wherein the displaying, by the electronic device in response to the fourth operation of returning to the first interface, after the notification of drawing completion is obtained, and based on a fact that the condition that the layer of the first interface is not destroyed and the window state of the home screen application is unchanged is not met, the second animation of returning to the first interface comprises:
in response to the fourth operation of returning to the first interface, starting, by the electronic device, to execute returning to the home screen;
determining, by the electronic device, whether the layer of the first interface is not destroyed and whether the window state of the home screen application is unchanged; and
when the condition that the layer of the first interface is not destroyed and the window state of the home screen application is unchanged is not met, after the electronic device obtains the notification of drawing completion, executing, by the electronic device, layer placement; and when all the window pictures are drawn, executing motion effect readiness processing by using the motion effect processing thread, and thereafter displaying the second animation of returning to the first interface.

6. The method according to any one of claims 2-5, wherein the method further comprises:
when the condition that the layer of the first interface is not destroyed and the window state of the home screen application is unchanged is not met, determining, by the electronic device, whether all window pictures of the home screen application are drawn; and
if all the window pictures are drawn, returning, by the electronic device, an animation of the first interface by using the layer of the first interface; or
if not all window pictures are drawn, re-obtaining, by the electronic device, the notification of drawing completion, and redetermining whether all window pictures are drawn until it is determined that all window pictures are drawn and an animation of returning to the first interface is displayed by using the layer of the first interface.

7. The method according to claim 6, wherein the method further comprises:
in response to the fourth operation of returning to the first interface, setting, by the electronic device, a scenario state to a scenario of returning to the home screen;
determining, by the electronic device, whether the scenario state is the scenario of returning to the home screen; and
when the scenario state is the scenario of returning to the home screen, determining, by the electronic device, that the condition that the layer of the first interface is not destroyed and the window state of the home screen application is unchanged is met, and thereafter setting, by the electronic device, the scenario state to a scenario of not returning to the home screen; and
the redetermining, by the electronic device, whether all window pictures are drawn comprises:
redetermining, by the electronic device, whether the scenario state is the scenario of returning to the home screen; and
when the scenario state is not the scenario of returning to the home screen, redetermining, by the electronic device, whether all the window pictures are drawn.

8. The method according to claim 2, wherein both the second operation and the fourth operation are operations of swiping up to return to the interface of the home screen application, and both the first animation and the second animation are animations from displaying a user interface of the first application to displaying the interface of the home screen application.

9. An electronic device, comprising a display screen, one or more processors, and one or more memories, wherein the one or more memories are configured to store computer program code, and the computer program code comprises computer instructions, and when the one or more processors execute the computer instructions, the electronic device is enabled to perform the method according to any one of claims 1-8.

10. A computer-readable storage medium comprising instructions, wherein the computer-readable storage medium stores a computer program, and when the computer program is executed by a processor, the method according to any one of claims 1-8 is implemented.
